# EUROPÄISCHE PATENTSCHRIFT

(11) **EP 1 635 630 B1**
(45) Veröffentlichungstag und Bekanntmachung des Hinweises auf die Patenterteilung: **18.03.2009**
(21) Anmeldenummer: 04728183.7
(22) Anmeldetag: 19.04.2004
(51) Int. Cl.: A01J 25/12, A01J 27/04

(54) **FORM- UND KÜHLVORRICHTUNG**
MOULDING AND COOLING DEVICE
DISPOSITIF DE FORMAGE ET DE REFROIDISSEMENT

(30) Priorität: 26.06.2003 DE 10328905
(43) Veröffentlichungstag der Anmeldung: 22.03.2006
(73) Patentinhaber: Natec Reich, Summer GmbH & Co. KG, 88178 Heimenkirch (DE)
(72) Erfinder: BIGGEL, Andreas, 88145 Hergatz (DE); ZEUSCHNER, Roland, 88260 Argenbühl (DE); BURGER, Josef, 88299 Leutkirch-Reichenhofen (DE); HUBER, Wolfgang, 87544 Blaichach (DE); BAUR, Wilhelm, 88167 Gestratz (DE)
(74) Vertreter: Braun-Dullaeus, Karl-Ulrich
(86) Internationale Anmeldenummer: PCT/EP2004/004138
(87) Internationale Veröffentlichungsnummer: WO 2005/000012

(56) Entgegenhaltungen:
- WO-A-97/10717
- US-A- 4 311 657
- US-A- 4 349 575
- US-A- 5 527 551
- US-A1- 2002 027 309

## Beschreibung

Die vorliegende Erfindung betrifft eine Vorrichtung zum Kühlen eines Produktes, nämlich einer fließfähigen aufgeschmolzenen Lebensmittelmasse, insbesondere einer Käseschmelze, die zu einem Lebensmittelband geformt wird, wobei die Vorrichtung zwei parallel gegeneinander laufende endlose Kühlbänder aufweist, die das flache Lebensmittelband mit beidseitigem Berührungskontakt führen und damit kühlen. Die Erfindung betrifft auch ein Verfahren zum Formen und Kühlen der Lebensmittelmasse.

Generell ist es aus der Verarbeitung von Käseschmelze zu vereinzelten Scheiben bekannt, die warme Schmelze zu einem breiten laufenden Band auszuwalzen und das Band auf die für die weitere Verarbeitung benötigte Temperatur abzukühlen. Dabei bedient sich eine bekannt Art der Kühlvorrichtung einer Kühlwalze, auf die das Band aufgelegt und über einen möglichst großen Winkelbereich mitgeführt wird bevor es von der Walze abgehoben wird. Die Kühlung geschieht mittel eines in die Walze eingebrachten Kühlmittels, beispielsweise kaltem Glykol. Auch die Kühlung durch Transport des Bandes auf einem Kühlband ist bekannt, wobei der Käse mit einem kühlenden Luftstrom beaufschlagt oder das Band selber mit einem Luftstrom oder mit Glykol gekühlt werden kann.

Nachteilig an den bekannten Arten der Kühlung ist, dass die Geschwindigkeit der Weiterverarbeitung durch den langsamen Kühlvorgang stark begrenzt wird. Dieser Nachteil kann nicht durch eine weitere Erniedrigung der Temperatur ausgeglichen werden, da ein an der Oberfläche zu schnell und zu tief gekühlter Schmelzkäse starke Qualitätseinbußen erfahren kann. Auch ist mit der bekannten einseitigen Kühlung die gewünschte Homogenität des Endproduktes schwerlich herstellbar, so dass es mitunter zu Gewichtsschwankungen kommt.

Von anderen Anlagen ist es bekannt, die Schmelze zwischen zwei Kühlbändern zu kühlen. Auch wenn mit diesen Anlagen eine erhöhte Kühlleistung erreicht wird, so kann wegen der auf das zu kühlende Käseband einwirkenden Schwerkraft eine exakte Homogenität der Produkteigenschaften nicht gewährleistet werden. Eine solche Anlage ist auch nur in Verbindung mit in Verarbeitungsrichtung vor der Kühlstrecke angeordneten separaten Mitteln zur Formgebung ("Kalibrieren") des Lebensmittelbandes zu betreiben. Diese Mittel sind aufwendig und führen wegen verstopfter Einlassdüsen leicht zu Ausfällen der gesamten Anlage. Außerdem bereitet die Kühlung der horizontal verlaufenden Bänder Schwierigkeiten beim Einhalt der gebotenen Hygiene, da das Produkt leicht mit tropfenden Kühlmittel in Berührung kommen kann.

Aus dem US 5,527,551 ist eine Vorrichtung zum Formen einer in Folie verpackten Käseschmelze bekannt, die zur Formgebung zwei vertikal angeordnete Riemenbänder aufweist. Aus der WO 97/10717 ist eine Methode und eine entsprechende in einer Produktionslinie anzuordnende Vorrichtung bekannt, mit der verpackte Lebensmittelportionen zwischen zwei horizontal verlaufenden Bändern eingefroren werden.

Aufgabe der vorliegenden Erfindung ist es nunmehr, eine Vorrichtung zum Kühlen einer fließfähigen aufgeschmolzenen Lebensmittelmasse, insbesondere einer Käseschmelzemasse, zu schaffen, die sich mit einfachen Mitteln umsetzen lässt und die eine Steigerung der Verarbeitungsgeschwindigkeit bei gleichzeitiger Verbesserung der Qualität des Endproduktes hinsichtlich der Homogenität und der Hygiene ermöglicht. Zudem ist es die Aufgabe der Erfindung, ein einfach umzusetzendes Verfahren zum Formen und Kühlen der Lebensmittelmasse zu schaffen.

Diese Aufgaben werden durch eine Vorrichtung mit den kennzeichnenden Merkmalen des Anspruch 1 und durch ein Verfahren nach Anspruch 14 gelöst.

Der Kerngedanke der Erfindung liegt darin, die Kühlbänder nicht, wie bekannt, horizontal anzuordnen, sondern sie mit einem erheblichen Neigungswinkel gegen die Horizontale auszurichten. Dabei ist der Neigungswinkel gegen die Horizontale mindestens 45° und im besonders vorteilhaften und einfach zu realisierenden Fall genau 90°, so dass die Kühlbänder entsprechend in der Vertikalen angeordnet sind. Diese vertikale Anordnung der Kühlbänder ist besonders platzsparend und ermöglicht eine beidseitige Kühlung des Lebensmittelbandes mit einem entsprechend hohem Wirkungsgrad. Da das Produkt im fließfähigen Zustand durch die beiden anliegenden Kühlbänder beidseitig geführt wird und daher nicht abfließen oder sich in der Form verändern kann, können auch wegen ihrer Viskosität schwierig zu handhabende Produkte einfach und komfortabel bearbeitet werden.

Im Verhältnis zu den bekannten Kühlwalzen ergibt sich schon allein daraus ein Kostenvorteil, dass die aufwendige und kostenintensive mit Teflon beschichtete Walze entfällt, die bei bekannten Einrichtungen zum Zwecke der Kalibrierung des Bandes im Einlassbereich angeordnet ist. Weitere Kostenvorteile sind durch einen einfacheren Aufbau, eine höhere Zuverlässigkeit und längere Standzeiten der Vorrichtung gegeben. Insgesamt führt die erfindungsgemäße Vorrichtung zu einer Steigerung der Verarbeitungsgeschwindigkeit bei gleichzeitiger Verbesserung der Qualität des Endprodukes hinsichtlich seiner Homogenität und seines äußeren Erscheinungsbildes. Da auf den vertikal verlaufenden Bändern in weit geringerem Maße als bekannt störende Ablagerungen des Produktes verbleiben, sind mit der erfindungsgemäßen Vorrichtung längere Produktionszyklen und Standzeiten ohne lästige Wartungs- oder Säuberungsarbeiten möglich. Dennoch kann durch die Erfindung ein Höchstmaß an Hygiene gewährleistet werden, was insbesondere darauf zurückzuführen ist, dass sich das Produkt und das Kühlmittel sauber trennen lassen.

Weitere wesentliche Vorteile der erfindungsgemäßen Vorrichtung resultieren auch daraus, dass mit der vertikalen Ausrichtung der sich bislang negative Einfluss der Schwerkraft minimiert werden kann, der bei den bekannten Vorrichtungen wegen der einseitigen Belastung zu Inhomogenitäten innerhalb des fertigen Produktes führte. Dieser Vorteil ergibt sich gerade für eine vorteilhafte Ausführungsform, bei der die Bewegungsrichtung der Kühlbänder einerseits vertikal und andererseits von oben nach unten ist, so dass der Einfluss der Schwerkraft bei der Herstellung des Bandes genutzt werden kann. Dabei wird das Produkt, das der Vorrichtung im Falle von Schmelzkäse mit einer Temperatur von etwa 80°C bis 90°C zugeführt wird, unter den symmetrisch einwirkenden Kräften unmittelbar in seine endgültige Beschaffenheit und Form im Hinblick auf die Oberfläche, die Dimensionierung des Bandes und die für die Weiterverarbeitung geeignete Konsistenz gebracht. Die geeignete Konsistenz wird im Falle von Schmelzkäse dann erreicht, wenn das Band auf eine Temperatur von etwa 5°C bis 15°C herunter gekühlt worden ist. Ein Vorteil der beidseitigen Kühlung während der vertikalen Bewegung liegt auch darin, dass es durch das unmittelbare und andauernde Anliegen der Kühlbänder an der Lebensmittelmasse zu einer homogenen und besonders glatten Oberfläche des Schmelzkäses kommt. Die gleichzeitige Bearbeitung garantiert somit eine gleichmäßige Oberfläche des Endproduktes.

Bei dem erfindungsgemäßen Kühlprozess findet auch insofern eine permanente und ununterbrochen kontrollierbare Bearbeitung des Lebensmittelbandes statt, als Parameter, wie der Anpressdruck, die Bandbreite und die Temperatur, jederzeit justierbar sind. Die Vorrichtung kann somit optimal auf das jeweilige Produkt eingestellt werden. Insbesondere kann die Geschwindigkeit der Kühlbänder so eingestellt werden, dass die Lebensmittelmasse, insbesondere der Schmelzkäse, beim Austritt aus der Kühleinrichtung durch das Kühlen einen pastösen und in der Form stabilen Zustand erreicht hat, in dem sie in einzelnen Lagen schichtbar ist, ohne dass die einzelnen Lagen aneinander festkleben.

Ein wesentlicher Vorteil der Erfindung liegt außerdem darin, dass durch die vertikale Anordnung mit den oben angeordneten parallelen Führungswalzen ohne weiteres eine Kalibriervorrichtung geschaffen ist, der das Produkt durch einfaches Auffüllen des von den Führungswalzen eingeschlossenen Einfüllspaltes zugeführt werden kann und die das Produkt in die richtige Form bringt. Die Befüllung der Vorrichtung geschieht damit über die Kalibriervorrichtung, wobei die sich gegeneinander drehenden und mit den Kühlbändern belegten Führungswalzen die in den Einfüllspalt eingegebene Masse zum Zwecke der Kalibrierung zu dem Band formen. Vorteilhafterweise sind zur Definition der Breite des Lebensmittelbandes zwei seitliche Begrenzungen vorzusehen, wobei der Abstand der Begrenzungen und der Abstand der die Kühlbänder tragenden Walzen einstellbar sein sollte. Die Vorrichtung dient damit zugleich als Form- und als Kühlvorrichtung. Über diese erfindungsgemäßen Mittel zum Kalibrieren ist somit zugleich die Stärke und die Breite des zu kühlenden Bandes über die Weite und die Breite des Einfüllspaltes einstellbar, wobei auf zusätzliche Mittel verzichtet werden kann.

Weiterhin ist es vorteilhaft, wenn die Kalibriervorrichtung weitere Mittel aufweist, mit denen die Breite des Lebensmittelbandes auch zwischen den Kühlbändern definiert wird. Diese werden vorteilhafterweise von Schläuchen gebildet, die insbesondere aus Teflon gefertigt und an die Begrenzungsmittel angehängt sind. Diese hängen entsprechend nach unten in den Spalt zwischen den parallelen Kühlbändern herab. Vorteilhafterweise werden die Schläuche an eine Luftpumpe angeschlossen, mit der sie aufgeblasen werden können. Im aufgeblasenen Zustand legen sich die Schläuche an die Kühlbänder und definieren damit die Breite und die Höhe des Kanals zwischen den Kühlbändern. Durch diese Mittel kann verhindert werden, dass sich die Breite des Lebensmittelbandes während der Kühlung verändert und es zu einer inhomogenen Breite kommt. Ein besonderer Vorteil der Begrenzungsmittel und der ergänzenden, in den Spalt hineinreichenden Mittel liegt darin, dass die Breite des Lebensmittelbandes exakt einstellbar ist und eine Nachbearbeitung der Ränder, insbesondere ein Abschneiden der Randstreifen, entfällt. So kann ein Arbeitschritt eingespart werden. Außerdem fällt kein unnötiger Abfall an, so dass der Produktverlust reduziert ist.

In einer weiteren bevorzugten Ausführungsform werden die Kühlbänder zum Zwecke zu deren Kühlung auf der dem Lebensmittelband abgewandten Oberfläche mit einer kühlenden Flüssigkeit bespritzt. Da die Kühlbänder eine besonders wirksame und homogene Kühlung bewirken, ist es möglich, einfaches Eiswasser mit einer Temperatur wenigen °C zu verwenden. Auf ein Kühlmittel wie Glykol, das wegen der einzuhaltenden Hygiene problematisch ist, kann verzichtet werden. Das bringt einerseits den Vorteil der geringeren Kosten und andererseits des minimierten Entsorgungsaufwandes. Zur Kühlung auf Temperaturen von 0°C oder weniger als 0°C kann das Wasser mit Salz versetzt werden, wobei dann die Kühlbänder entsprechend mit dieser Salzlösung bespritzt werden. Ein weiterer Vorteil der vertikalen Kühlbänder liegt darin, dass das verwendete Kühlmittel von der Rückseite der Bänder kontrolliert abgeführt werden kann, ohne auf das Produkt zu tropfen. Entsprechend ist eine Vorrichtung zur Aufbringung und zum Entfernen der kühlenden Flüssigkeit vorzusehen, wobei die Kühlflüssigkeit in einem Kreislauf geführt werden kann.

Wie schon dargelegt, liegt ein bedeutender Vorteil in der mit der Erfindung zu erreichenden Hygiene. Dies rührt auch daher, dass die Kühlbänder wegen ihrer hohen Effektivität auch dann noch eine ausreichende Kühlung herbeiführen, wenn sie mit einfachem Eiswasser auf Temperaturen von nicht weniger als 2-3 °C gekühlt werden. Bei entsprechend eingestellter Außenlufttemperatur kann damit eine Schwitzwasserbildung verhindert werden, was aus bakteriologischen Gründen bei der Herstellung von Schmelzkäse besonders wichtig ist. Um eine Außenlufttemperatur von 6-8° C garantieren zu können, kann die gesamte Vorrichtung auf eine einfache Art abgeschirmt und mit steriler und gekühlter Luft versorgt werden.

Bei der erfindungsgemäßen Vorrichtung sind Mittel vorzusehen, die das Band am Ende der Kühlstrecke von den Kühlbändern abgelösten und in eine Richtung lenken, damit es der weiteren Bearbeitung zugeführt werden kann. Zu diesem Zweck werden zwei Methoden vorgeschlagen, die gemeinsam oder alternativ eingesetzt werden können:

So wurde festgestellt, dass das Ablösen der Käsemasse mit einem der beiden Kühlbänder bestimmt wird von dem Temperaturunterschied der Kühlbänder am Ort der Auftragung, also am Einfüllspalt. Um die Ablösung von einem bestimmten Kühlband zu begünstigen wird dessen Temperatur im Einfüllspalt zwischen etwa 2°C und 5°C geringer eingestellt, als die Temperatur des anderen Kühlbandes. Diese niedrigere Temperatur wird durch Temperieren, insbesondere durch Befüllen der oberen Antriebswalze mit entsprechend gekühlter Kühlflüssigkeit erreicht. Der anfängliche Temperaturunterschied wirkt vom Auftragsniveau bis zur ersten Kühlwasserauftragstelle nach der Kalibrierung des Käsebandes. Auf dem Band mit höherer Auftragstemperatur bleibt das Produkt am Bandausgang haften. Somit kann über die Temperatureinstellung an der Auftragstelle der Verlauf des Lebensmittelbandes am Ausgang festgelegt werden.

Als alternative oder ergänzende Methode wird vorgeschlagen, dass die beiden Kühlbänder am Ende der Kühlstrecke unterschiedliche Länge aufweisen. So hat sich herausgestellt, dass das Käseband bevorzugt zusammen mit dem einen abbiegenden Kühlband von dem anderen geradeaus weiterlaufenden Kühlband abhebt. So kann durch einen Versatz eine definierte Ablenkung des Käsebandes erreicht werden. Im Falle der vertikalen Anordnung kann dieser Effekt dadurch erzielt werden, dass die Achse einer der beiden unteren Führungswalzen in vertikaler Richtung um ein Versatzstück oberhalb der Achse der anderen unteren Führungswalzen angeordnet ist, so dass sich der von dieser Walze geführte Kühlbänder von dem anderen.an dieser Stelle noch vertikal verlaufenden Kühlband abhebt.

Ein weiterer Vorteil der Erfindung liegt darin, dass sich die Kühlbänder oberhalb des Einfüllspaltes mit Zutaten, insbesondere mit Kräutern oder Gewürzen belegen lassen, die dann in einem Formprozess in die Oberflächen des Bandes aus Schmelzkäse eingearbeitet werden. Im Gegensatz zu den bekannten Produkten, bei denen die Zutaten innerhalb der gesamten Masse verteilt und damit zum größtenteils Unsichtbar sind, bleiben bei dieser Art der Herstellung die Zutaten auf der Oberfläche und sind somit für den Kunden ersichtlich. Dadurch kann die Attraktivität des Produktes in den Augen des Verbrauchers erhöht werden.

Zudem ist es von Vorteil, dass Schmelzkäse mit einem im Verhältnis zu bekannten Herstellungsprozessen geringeren Anteil an Trockenmasse verarbeitet werden kann, ohne dass es zu einem Festkleben auf der Kühlvorrichtung kommt. Im Vergleich zu den bislang eingesetzten Kühlwalzen aus Teflon ist eine Reduzierung von etwa 1 % Trockenmasse problemlos möglich.

Eine besondere Ausführungsform der Erfindung ist in den Figuren 1 bis 3 dargestellt und wird nachfolgend näher beschrieben. Es zeigen:
- **Figur 1**: die Vorrichtung zum Formen und Kühlen,
- **Figur 2**: der Einfüllspalt der Vorrichtung und
- **Figur 3**: eine perspektivische Ansicht des Einfüllspaltes.

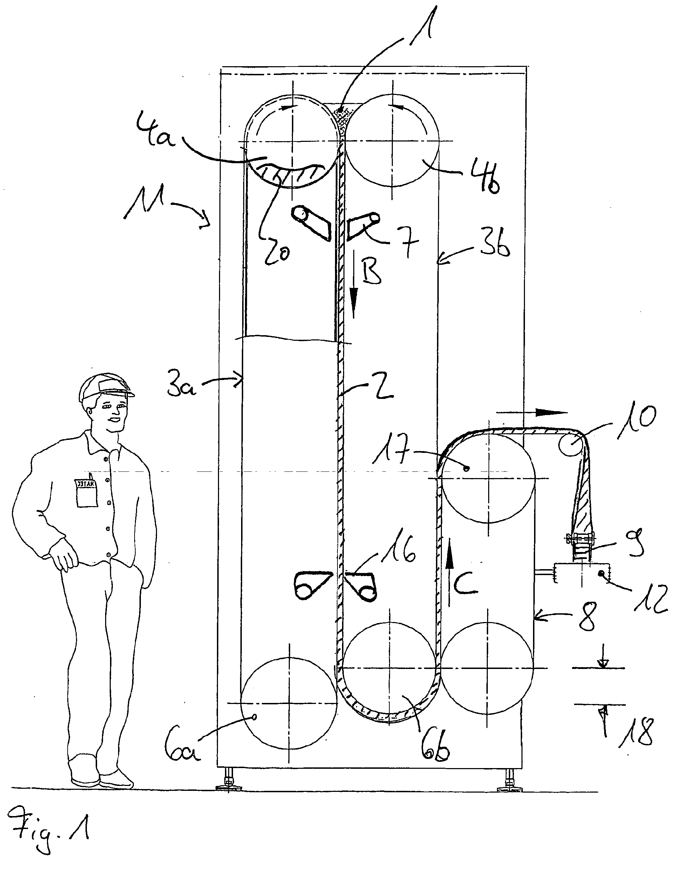

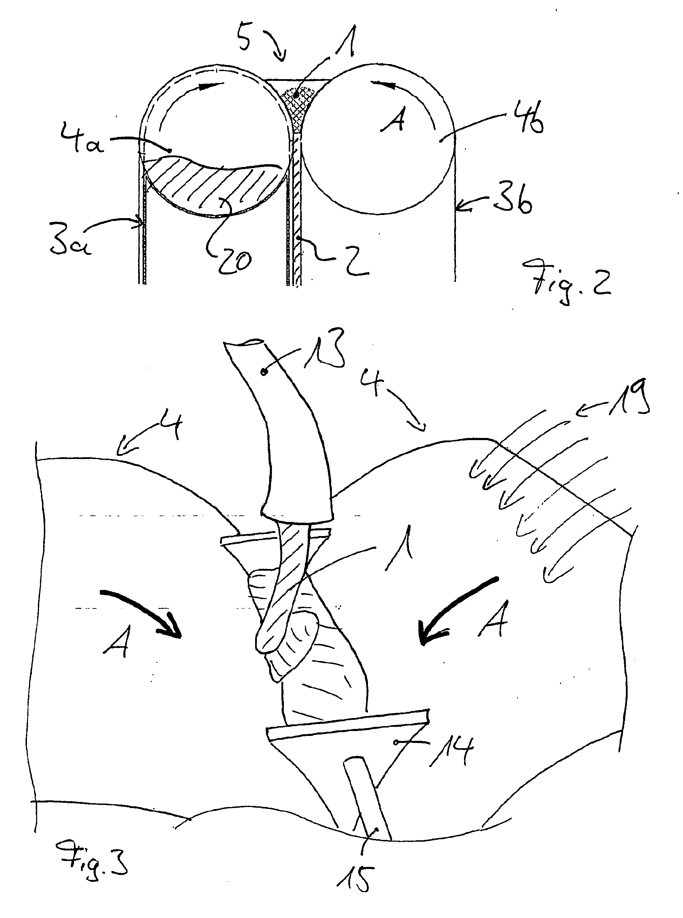

Figur 1 zeigt schematisch eine etwa 3 m hohe Vorrichtung zum Kühlen einer Käseschmelze 1 (s. a. Figur 2), die bei Eintritt in die Kühlzone der Vorrichtung zu einem kontinuierlichen Lebensmittelband 2 gewalzt wird. Die Vorrichtung weist zwei gegeneinander laufende (Pfeile A) endlose Kühlbänder 3a und 3b auf, die das nach unten laufende Käseband 2 mit beidseitigem Berührungskontakt führen und damit kühlen. Die beiden Kühlbänder 3a und 3b verlaufen parallel, wobei ihr Abstand die Stärke des Käsebandes 2 definiert. Die Bewegungsrichtung geht von Abstand die Stärke des Käsebandes 2 definiert. Die Bewegungsrichtung geht von oben nach unten (Pfeil B).

Die fließfähige Käsemasse 1 wird über eine Füllvorrichtung 13 (Figur 3) in einen Einfüllspalt 5 eingebracht, der von zwei oberen, parallel angeordneten und die Kühlbänder 3 führende Führungswalzen 4 gebildet wird. Die Führungswalzen 4 sind angetrieben. Der Einfüllspalt 5 bildet einen idealen Produktspeicher mit Pufferfunktion, über den die Masse 1 für die Kalibrierung, insbesondere für die Einstellung der Bandstärke und Bandbreite, bereitgestellt wird. Unten sind die Kühlbänder 3 von jeweils zwei unteren Führungswalzen 6 geführt, die nicht angetrieben sind. Auf die mit Kühlband 3 bedeckten Führungswalzen 4 können Kräuter und/oder Gewürze aufgebracht werden (Pfeile 19), die auf der Oberfläche des Käsebandes 2 verbleiben.

Zur Einstellung der Bandbreite sind zwei Begrenzungsmittel 14 in Form aus Kunststoff gefertigter Dreiecke vorgesehen, deren Seiten an die Wölbung der Bänder angepasst ist und die mit einer Spitze in den Einfüllspalt 5 hineinreichen. An stangenförmigen Haltern 15 sind die Begrenzungsmittel 14 verschieblich. Diese zur Kalibrierung geeigneten Mittel sind symmetrisch angeordnet, was sich positiv auf das Produktgewicht auswirkt. So wird das Produkt von beiden Seiten gleichmäßig beeinflusst und es ist keine in Bewegungsrichtung vor den Kühlbändern 3 angeordnete separate Kalibriervorrichtung notwendig, mit der die Stärke des Bandes 2 einstellbar wäre. Die Breite des Einfüllspaltes und damit die Stärke des Käsebandes 2 ist über den Abstand der Führungswalzen 4 und 6 einstellbar, wobei das Band mit den Walzen 4b und 6b horizontal verschieblich ist.

Erfindungsgemäß sind die Kühlbänder 3 vertikal ausgerichtet und führen das Käseband 2 in dem entsprechenden Winkel. Sie sind aus Stahlband gefertigt, wobei das Stahlband typischerweise eine Stärke von etwa 0,2 mm - 1 mm und eine Breite etwa 1.5 m aufweist. Zur Führung eines Kühlbandes 3 auf den Walzen 4 und 6 kann dieses auf der Innenseite mit Profilen aus Gummi versehen sein, die parallel zur Bewegungsrichtung verlaufen. Beispielsweise werden dabei auf die Ränder eines Kühlbandes 3 Profile mit insbesondere trapezförmigem Querschnitt -aufgeklebt, welche die entsprechenden Kanten der Walzen übergreifen. So ist eine Führung der Kühlbänder 3 in der zur Bewegung senkrechten Richtung gewährleistet.

Die Stärke eines Kühlbandes 3 ist im Falle der Führungswalze 4a durch die unterbrochene Linie angedeutet. Die Kühlbänder 3 laufen unten über die unteren Führungswalzen 6. Zwischen den Führungswalzenpaaren 4 und 6 bewegen sich die Kühlbänder 3 nahezu frei, wobei eine nicht gezeigte Anpressvorrichtung vorgesehen ist, die auf einen der Kühlbänder 3 wirkt und über die der Abstand zwischen den Kühlbändern 3 und/oder der Anpressdruck auf das Band 1 einstellbar ist. Über Führungsrinnen 7, werden die Kühlbänder 3 auf der dem Band 1 abgewandten Oberfläche mit kühlendem Eiswasser bespritzt, das nach unten mitgeführt und letztendlich über Abstreifer 16 abgeführt wird.

Um die untere Führungswalze 6b wird das Käseband 2 herumgeführt und läuft eingeklemmt zwischen dem Kühlband 3b und einem Übergabeband 8 wieder nach oben (Pfeil C). An der Übergabe zur Weiterverarbeitung wird das breite Käseband 2 vermittels einer Schneidwalze 10 in mehrere schmale Bänder geschnitten, die einzeln um 90° gedreht und auf einem Stapel 9 übereinander gelegt werden. Der Stapel 9 aufeinanderliegender Bänder wird mit einem Austragsband 12 von der Vorrichtung abgeführt, wobei nachfolgend von den übereinanderliegenden Bändern Stapel vereinzelter Scheiben abgeschnitten werden. Deutlich zu erkennen ist, dass die Achse der Walze 6b um ein Versatzstück 18 über der Walze 6 angeordnet ist, um den Verbleib des Käsebandes 2 auf dem Bänder 3b zu gewährleisten. Wegen des erwähnten Ablöseffektes hebt die den Übergabebänder 8 führende Walze 17 das Käseband 2 problemlos von dem Bänder 3b ab. Zudem ist die Führungswalze 4a durch Einbringen von Kühlflüssigkeit 20 im Verhältnis zur Führungswalze 4b um etwa 5°C abgekühlt, so dass ein Abheben des Käsebandes 2 von dem Kühlband 3a sichergestellt ist.

Um ein kontrollierbares Klima gewährleisten zu können, ist die Kühlvorrichtung von einem relativ dicht abgeschlossenen Gehäuse 11 umgeben.

## Patentansprüche

1. Vorrichtung zum Kühlen einer fließfähigen aufgeschmolzenen Lebensmittelmasse (1), insbesondere einer Käseschmelze, die zu einem Lebensmittelband (2) geformt wird, wobei die Vorrichtung zwei parallel verlaufende endlose Kühlbänder (3a, 3b) aufweist, die das Lebensmittelband (2) mit beidseitigem Berührungskontakt führen und damit kühlen,
**gekennzeichnet durch**
zwei obere Führungswalzen (4a, 4b), die einen die Masse (1) aufnehmenden Einfüllspalt (5) zwischen den geführten Kühlbändern ausbilden, wobei die sich gegeneinander drehenden und mit den Kühlbändern (3a, 3b) belegten Führungswalzen (4a, 4b) die in den Einfüllspalt (5) eingegebene Masse in der Art einer Kalibriervorrichtung zu dem Lebensmittelband formen, wobei die Kühlbänder (3a, 3b) in einem Winkel zwischen 45° und 90° gegen die Horizontale ausgerichtet sind und das Band (2) in dem entsprechenden Winkel führen.

2. Vorrichtung nach Anspruch 1,
**dadurch gekennzeichnet , dass** die Kühlbänder (3a, 3b) in der Vertikalen angeordnet sind.

3. Vorrichtung nach Anspruch 2,
**dadurch gekennzeichnet , dass** die Bewegungsrichtung der Kühlbänder (3a, 3b) von oben nach unten ist.

4. Vorrichtung nach Anspruch 3,
**dadurch gekennzeichnet, dass** jedes Kühlband (3a, 3b) jeweils über eine obere (4a, 4b) und über eine untere (6a, 6b) Führungswalze läuft, wobei alle Führungswalzen (4a, 4b, 6a, 6b) achsparalell zueinander ausgerichtet sind.

5. Vorrichtung nach Anspruch 4,
**dadurch gekennzeichnet , dass** die Achse einer der beiden unteren Führungswalzen (6a, 6b) in vertikaler Richtung um ein Versatzstück oberhalb der Achse der anderen unteren Führungswalzen (6a, 6b) angeordnet ist, so dass sich das von dieser Walze geführte Kühlband (3a, 3b) von dem anderen an dieser Stelle noch vertikal verlaufenden Kühlband abhebt.

6. Vorrichtung nach Anspruch 4,
**dadurch gekennzeichnet, dass** eine der beiden oberen Führungswalzen (4a) mit Kühlmittel (20) beaufschlagt ist, um eine Abkühlung dieser Führungswalze (4a) im Verhältnis zu der anderen Führungswalze (4b) zu erreichen.

7. Vorrichtung nach Anspruch 1,
**dadurch gekennzeichnet , dass** die mit den Kühlbändern (3a, 3b) belegten Führungswalzen (4a, 4b) eine Kalibriervorrichtung bilden, wobei mittels der Kalibriervorrichtung die Stärke des zu kühlenden Lebensmittelbandes (2) über die Breite des Einfüllspaltes (5) einstellbar ist, wobei die Kalibriervorrichtung Mittel aufweist, mit denen die Breite des Bandes (2) einstellbar ist.

8. Vorrichtung nach Anspruch 7,
**dadurch gekennzeichnet, dass** die Mittel gebildet werden von insbesondere aus Teflon gefertigten Schläuchen, die an die Breite des Einfüllspalts definierenden Begrenzungsmitteln angebracht sind und in den Spalt zwischen den parallelen Kühlbändern (3a, 3b) hineinreichen.

9. Vorrichtung nach Anspruch 8,
**dadurch gekennzeichnet, dass** die Schläuche aufblasbar sind und sich im aufgeblasenen Zustand an die Kühlbänder (3a, 3b) anlegen,

10. Vorrichtung nach einem der vorherigen Ansprüche,
**dadurch gekennzeichnet, dass** die Kühlbänder (3a, 3b) auf der dem Lebensmittelband (2) abgewandten Oberfläche mit kühlender Flüssigkeit (7), insbesondere mit Eiswasser, bespritzt werden.

11. Vorrichtung nach einem der vorherigen Ansprüche,
**dadurch gekennzeichnet , dass** die Geschwindigkeit der Kühlbänder (3a, 3b) so eingestellt ist, dass die Lebensmittelmasse (1) beim Austritt aus der Kühleinrichtung durch das Kühlen einen pastösen Zustand erreicht hat, in dem sie in Lagen schichtbar ist.

12. Vorrichtung nach einem der vorherigen Ansprüche,
**dadurch gekennzeichnet , dass** die Kühlbänder (3a, 3b) aus Stahlband gefertigt sind, wobei das Stahlband insbesondere eine Stärke zwischen 0,1 und 3 mm und insbesondere eine Breite zwischen 0.5 und 2.0 m aufweist.

13. Vorrichtung nach einem der vorherigen Ansprüche,
**gekennzeichnet durch** eine Anpressvorrichtung, die auf eines der Kühlbänder (3a, 3b) wirkt und über die der Abstand zwischen den Kühlbändern (3a, 3b) und/oder der Anpressdruck auf das Band (2) einstellbar ist.

14. Verfahren zum Formen und Kühlen einer fließfähigen aufgeschmolzenen Lebensmittelmasse, insbesondere einer Käseschmelze, durch eine Vorrichtung nach einem der vorherigen Ansprüche,
**dadurch gekennzeichnet,**
**dass** die Masse von oben dem Einfüllspalt, der von den die Kühlbänder (3a, 3b) führenden Führungswalzen (4a, 4b) geformt wird, zugeführt wird, dass die Masse im Anfangsbereich der Verarbeitungsstrecke durch die Kühlbänder (3a, 3b) zu einem Lebensmittelband gewalzt wird und dass die Masse nach dem Walzen vermittels der parallelen Kühlbänder (3a, 3b) gekühlt wird.

## Claims

1. Device for cooling a flowable melted food product (1), in particular a cheese melt, which is moulded to form a food strip (2), wherein the device has two endless cooling belts (3a, 3b) which run in parallel, guide the food strip (2) with touching contact on both sides and therefore cool the same, **characterized by** two upper guide rollers (4a, 4b) which form a filling gap (5), which receives the product (1) between the guided cooling belts, the guide rollers (4a, 4b), which rotate counter to each other and are covered by the cooling belts (3a, 3b), moulding, in the manner of a calibrating device, the product put into the filling gap (5) to form the food strip, and the cooling belts (3a, 3b) being oriented at an angle of between 45° and 90° with respect to the horizontal and guiding the strip (2) at the corresponding angle.

2. Device according to Claim 1, **characterized in that** the cooling belts (3a, 3b) are arranged vertically.

3. Device according to Claim 2, **characterized in that** the direction of movement of the cooling belts (3a, 3b) is from top to bottom.

4. Device according to Claim 3, **characterized in that** each cooling belt (3a, 3b) runs in each case over an upper guide roller (4a, 4b) and over a lower guide roller (6a, 6b), with all of the guide rollers (4a, 4b, 6a, 6b) being oriented axially parallel to one another.

5. Device according to Claim 4, **characterized in that** the axis of one of the two lower guide rollers (6a, 6b) is offset vertically above the axis of the other lower guide rollers (6a, 6b) such that the cooling belt (3a, 3b) guided by said roller is lifted up away from the other cooling belt which is still running vertically at this location.

6. Device according to Claim 4, **characterized in that** one of the two upper guide rollers (4a) is acted upon by coolant (20) in order to cool said guide roller (4a) in relation to the other guide roller (4b).

7. Device according to Claim 1, **characterized in that** the guide rollers (4a, 4b) which are covered by the cooling belts (3a, 3b) form a calibrating device, with the thickness of the food strip (2) which is to be cooled being adjustable over the width of the filling gap (5) by means of the calibrating device, and with the calibrating device having means with which the width of the strip (2) is adjustable.

8. Device according to Claim 7, **characterized in that** the means are formed by tubes which are manufactured in particular from Teflon, are attached to boundary means defining the width of the filling gap and reach into the gap between the parallel cooling belts (3a, 3b).

9. Device according to Claim 8, **characterized in that** the tubes can be inflated and, in the inflated state, are placed onto the cooling belts (3a, 3b).

10. Device according to one of the preceding claims, **characterized in that** the cooling belts (3a, 3b) are sprayed on the surface facing away from the food strip (2) with cooling liquid (7), in particular with iced water.

11. Device according to one of the preceding claims, **characterized in that** the speed of the cooling belts (3a, 3b) is adjusted in such a manner that the food product (1) on leaving the cooling system has been caused by the cooling to reach a pasty state in which it can be arranged in layers.

12. Device according to one of the preceding claims, **characterized in that** the cooling belts (3a, 3b) are manufactured from steel strip, with the steel strip having a thickness of between 0.1 and 3 mm and in particular a width of between 0.5 and 2.0 m.

13. Device according to one of the preceding claims, **characterized by** a pressing device which acts on one of the cooling belts (3a, 3b) and via which the distance between the cooling belts (3a, 3b) and/or the contact pressure in the strip (2) can be adjusted.

14. Method for moulding and cooling a flowable melted food product, in particular a cheese melt, by means of a device according to one of the preceding claims, **characterized in that** the product is supplied from above to the filling gap which is formed by the guide rollers (4a, 4b) guiding the cooling belts (3a, 3b), **in that** the product is rolled in the initial region of the processing section by the cooling belts (3a, 3b) to form a food strip, and **in that**, after the rolling, the product is cooled by means of the parallel cooling belts (3a, 3b).

## Revendications

1. Dispositif de refroidissement d'une composition de produit alimentaire (1) fondue coulante, en particulier du fromage fondu, qui est formée en bande de produit alimentaire (2), le dispositif présentant deux bandes de refroidissement (3a, 3b) sans fin, s'étendant en parallèle, qui guident la bande de produit alimentaire (2) en contact avec elles des deux côtés et qui la refroidissent ainsi,
**caractérisé par**
deux rouleaux de guidage supérieurs (4a, 4b) qui constituent entre les bandes de refroidissement guidées une fente de remplissage (5) recevant la composition (1), les rouleaux de guidage (4a, 4b) tournant l'un contre l'autre et équipés des bandes de refroidissement (3a, 3b) formant la composition introduite dans la fente de remplissage (5) à la manière d'un dispositif de calibrage pour donner la bande de produit alimentaire, les bandes de refroidissement (3a, 3b) étant orientées suivant un angle compris entre 45° et 90° par rapport à l'horizontale, et guidant la bande (2) suivant l'angle correspondant.

2. Dispositif selon la revendication 1,
**caractérisé en ce que** les bandes de refroidissement (3a, 3b) sont disposées à la verticale.

3. Dispositif selon la revendication 2,
**caractérisé en ce que** le sens de déplacement des bandes de refroidissement (3a, 3b) est de haut en bas.

4. Dispositif selon la revendication 3,
**caractérisé en ce que**
chaque bande de refroidissement (3a, 3b) passe à chaque fois sur un rouleau de guidage supérieur (4a, 4b) et sur un rouleau de guidage inférieur (6a, 6b), tous les rouleaux de guidage (4a, 4b, 6a, 6b) étant orientés avec leurs axes parallèles les uns aux autres.

5. Dispositif selon la revendication 4,
**caractérisé en ce que**
l'axe de l'un des deux rouleaux de guidage inférieurs (6a, 6b) est disposé dans la direction verticale avec un décalage au-dessus de l'axe de l'autre rouleau de guidage inférieur (6a, 6b), de sorte que la bande de refroidissement (3a, 3b) guidée par ce rouleau se soulève de l'autre bande de refroidissement s'étendant encore verticalement à cet endroit.

6. Dispositif selon la revendication 4,
**caractérisé en ce que**
l'un des deux rouleaux de guidage supérieurs (4a) est sollicité par un réfrigérant (20) afin d'obtenir un refroidissement de ce rouleau de guidage (4a) par rapport à l'autre rouleau de guidage (4b).

7. Dispositif selon la revendication 1,
**caractérisé en ce que** les rouleaux de guidage (4a, 4b) équipés des bandes de refroidissement (3a, 3b) forment un dispositif de calibrage, l'épaisseur de la bande de produit alimentaire (2) à refroidir pouvant être ajustée au moyen du dispositif de calibrage sur la largeur de la fente de remplissage (5), le dispositif de calibrage présentant des moyens avec lesquels la largeur de la bande (2) peut être ajustée.

8. Dispositif selon la revendication 7,
**caractérisé en ce que** les moyens sont formés par des tuyaux notamment fabriqués en téflon, qui sont montés sur des moyens de limitation définissant la largeur de la fente de remplissage et qui s'étendent dans la fente entre les bandes de refroidissement parallèles (3a, 3b).

9. Dispositif selon la revendication 8,
**caractérisé en ce que**
les tuyaux peuvent être gonflés et s'appliquer dans l'état gonflé contre les bandes de refroidissement (3a, 3b).

10. Dispositif selon l'une quelconque des revendications précédentes,
**caractérisé en ce**
**qu'**on pulvérise sur les bandes de refroidissement (3a, 3b), sur la surface opposée à la bande de produit alimentaire (2), un liquide de refroidissement (7), en particulier de l'eau glacée.

11. Dispositif selon l'une quelconque des revendications précédentes,
**caractérisé en ce que**
la vitesse des bandes de refroidissement (3a, 3b) est ajustée de telle sorte que la composition de produit alimentaire (1) ait atteint, à sa sortie du dispositif de refroidissement, sous l'effet du refroidissement, un état pâteux dans lequel elle peut être stratifiée en couches.

12. Dispositif selon l'une quelconque des revendications précédentes,
**caractérisé en ce que**
les bandes de refroidissement (3a, 3b) sont fabriquées en bande d'acier, la bande d'acier ayant notamment une épaisseur comprise entre 0,1 et 3 mm et notamment une largeur comprise entre 0,5 et 2,0 m.

13. Dispositif selon l'une quelconque des revendications précédentes,
**caractérisé par** un dispositif de pressage qui agit sur l'une des bandes de refroidissement (3a, 3b) et par le biais duquel la distance entre les bandes de refroidissement (3a, 3b) et/ou la pression d'application sur la bande (2) peu(ven)t être ajustée(s) .

14. Procédé de formage et de refroidissement d'une composition de produit alimentaire fondue coulante, en particulier du fromage fondu, par un dispositif selon l'une quelconque des revendications précédentes,
**caractérisé en ce que**
la composition est acheminée par le haut à la fente de remplissage, qui est formée par les rouleaux de guidage (4a, 4b) guidant les bandes de refroidissement (3a, 3b), **en ce que** la composition est laminée dans la région du commencement de la section de traitement par les bandes de refroidissement (3a, 3b) pour former une bande de produit alimentaire, et **en ce que** la composition est refroidie après le laminage au moyen des bandes de refroidissement parallèles (3a, 3b).
